# EUROPÄISCHE PATENTSCHRIFT

(11) **EP 0 639 130 B1**
(45) Veröffentlichungstag und Bekanntmachung des Hinweises auf die Patenterteilung: **18.09.1996**
(21) Anmeldenummer: 93909958.6
(22) Anmeldetag: 12.05.1993
(51) Int. Cl.: B62D 5/083

(54) **HILFSKRAFTLENKUNG, INSBESONDERE FÜR KRAFTFAHRZEUGE**
ASSISTED STEERING MECHANISM, IN PARTICULAR FOR MOTOR VEHICLES
DIRECTION ASSISTEE, NOTAMMENT POUR VEHICULES A MOTEUR

(30) Priorität: 15.05.1992 DE 4216053
(43) Veröffentlichungstag der Anmeldung: 22.02.1995
(73) Patentinhaber: ZF FRIEDRICHSHAFEN Aktiengesellschaft, D-88038 Friedrichshafen (DE)
(72) Erfinder: MAJER, Hans-Werner, D-7070 Schwäbisch Gmünd (DE); SCHÖFFEL, Jörgen, D-7070 Schwäbisch Gmünd (DE); SCHÄNZEL, Rainer, D-7087 Essingen (DE)
(86) Internationale Anmeldenummer: EP9301170
(87) Internationale Veröffentlichungsnummer: WO9323277

(56) Entgegenhaltungen:
- WO-A-85/02380
- DE-A- 2 221 232
- DE-A- 2 857 342
- DE-B- 2 500 965

## Beschreibung

Die Erfindung betrifft eine Hilfskraftlenkung, insbesondere für Kraftfahrzeuge, nach dem Oberbegriff des Anspruches 1. Eine derartige Hilfskraftlenkung besitzt ein als Drehschieberventil ausgebildetes Steuerventil für die Steuerung eines von einer Servopumpe aus einem Behälter geförderten Druckmittels zu und von den Druckräumen eines Servomotors. Das Drehschieberventil weist zwei Rückwirkungsräume auf, die über je eine feste Drosselstelle und über eine gemeinsame Drosselstelle an die Druckleitung der Servopumpe angeschlossen sind. Der in den Rückwirkungsräumen wirksame Rückwirkungsdruck wird durch wenigstens ein Abschneidventil auf einen Höchstwert begrenzt.

Eine derartige Hilfskraftlenkung ist bekannt aus dem Firmenprospekt der Zahnradfabrik Friedrichshafen AG, Geschäftsbereich Schwäbisch Gmünd "ZF-Zahnstangen-Hydrolenkung mit Drehschieber-Servotronic" vom 06.03.89.

Wird das in dieser Druckschrift erwähnte Abschneidventil als Sitzventil ausgeführt, wie es häufig der Fall ist, so wird der beim Ansprechen des Ventils abgeregelte Druckmittelstrom direkt in den Tank abgeleitet. Dadurch wird die für den Servomotor der Hilfskraftlenkung zur Verfügung stehende Druckmittelmenge erheblich verringert. Außerdem entstehen beim Ableiten des Druckmittelstromes Strömungs- und Schwingungsgerausche. Durch unvermeidbare Fertigungstoleranzen ist auch der Schaltdruck toleranzbehaftet.

Der Erfindung liegt die Aufgabe zugrunde, eine nach dem Stand der Technik bekannte Hilfskraftlenkung derart zu verbessern, daß ein Verlust von Druckmittel beim Ansprechen des Abschneidventils weitestgehend vermieden wird und daß die Toleranzen des Ansprechdruckes des Abschneidventils möglichst ganz vermieden werden.

Diese Aufgabe wird durch die im Anspruch 1 gekennzeichnete Hilfskraftlenkung gelöst. Dabei wird das Abschneidventil als Druckwaage ausgebildet, deren Ansprechdruck ohne Demontage von außen einstellbar ist. Außerdem wird das Abschneidventil in der Druckleitung der Servopumpe zwischen der Servopumpe und den Rückwirkungsräumen eingesetzt. Durch die Ausbildung als Druckwaage und die Anordnung in der Druckleitung wird beim Ansprechen des bschneidventiles keine Verbindung von der Druckleitung zum Behälter geöffnet. Vielmehr wird die Verbindung von der Druckleitung zu den Rückwirkungsräumen in zunehmendem Maße abgesperrt, so daß der ganze von der Servopumpe geförderte Druckmittelstrom weiterhin dem Servomotor der Hilfskraftlenkung zur Verfügung steht. Dadurch, daß der Ansprechdruck des Abschneidventils ohne Demontage von außen einstellbar ist, können die gesamten Fertigungstoleranzen des Abschneidventils ausgeschaltet und weitere Toleranzen der anderen Lenkungsteile kompensiert werden.

Zweckmäßige und vorteilhafte Ausgestaltungen der Erfindung sind in den Unteransprüchen angegeben.

Der Ansprechdruck des Abschneidventils läßt sich besonders einfach einstellen, wenn der Ventilkörper des Abschneidventils aus zwei Teilen besteht, dessen innenliegendes Teil verdrehfest und axial verschiebbar und dessen außenliegendes Teil drehbar und axial unverschiebbar in der Ventilbohrung geführt sind. Das innenliegende Teil ist mit dem außenliegenden durch ein Gewinde verbunden. Wird das außenliegende Teil durch eine von außen zugängliche Einstellvorrichtung verdreht, so wird eine im Inneren des Ventilskörpers liegende Druckfeder mehr oder weniger stark zusammengedrückt. Da die Druckfeder auf den im Inneren des Ventilskörpers liegenden Steuerkolben wirkt, kann der Ansprechdruck des Abschneidventils sehr genau eingestellt werden.

Wird die gemeinsame Drosselstelle derart ausgebildet, daß sie einen in Abhängigkeit von der Fahrzeugeschwindigkeit veränderbaren Durchflußquerschnitt aufweist, so lassen sich unterschiedliche Rückwirkungskräfte geschwindigkeitsabhängig erreichen.

Wird die gemeinsame Drosselstelle mit einem konstanten Durchflußquerschnitt ausgeführt, so kann diese Drosselstelle entweder in dem Ventilkörper oder in dem Steuerkolben angeordnet sein.

Im folgenden wird die Erfindung anhand dreier in der Zeichnung dargestellter Ausführungsbeispiele näher erläutert. Es zeigt
- Fig. 1: eine schematische Darstellung der Hilfskraftlenkung mit einem Längsschnitt durch das erfindungsgemäße Abschneidventil;
- Fig. 2 und 3: zwei Varianten des Abschneidventils mit Konstantdrossel.

Die Hilfskraftlenkung enthält in einem nicht dargestellten Lenkgetriebe ein Steuerventil 1, das als Drehschieberventil ausgebildet ist. Über das Steuerventil 1 wird einem Servomotor 2 Druckmittel von einer Servopumpe 3 zugeführt und von dort in einen Behälter 4 zurückgeführt. Das Steuerventil 1 enthält zwei koaxial ineinandergelagerte Ventilelemente 5 und 6, die relativ zueinander verdrehbar sind. In dem Steuerventil 1 ist ein Rückwirkungskolben 7 angeordnet, der über eine nur schematisch angedeutete Schrägverzahnung 8 mit einem der Ventilelemente 5 und 6 verbunden ist. Der Rückwirkungskolben 7 trennt zwei Rückwirkungsräume 10 und 11 voneinander. Die Rückwirkungsräume 10 und 11 sind je über eine feste Drosselstelle 12 bzw. 13 und über eine gemeinsame Drosselstelle 14 an eine Druckleitung 15 der Servopumpe 3 angeschlossen. Die Rückwirkungsräume 10 und 11 sind mit den zugehörigen Arbeitsräumen des Servomotors 2 über Rückschlagventile 16 und 17 verbunden, die in Richtung auf die Arbeitsräume des Servomotors 2 aufsteuerbar sind.

Einzelheiten des Drehschieberventils und der Rückwirkungsräume werden nicht beschrieben, da diese bekannt sind, beispielsweise aus der EP-B1-0 198 824.

In die Druckleitung 15 ist zwischen der Servopumpe 3 und den Rückwirkungsräumen 10 und 11, genauer gesagt zwischen der gemeinsamen Drosselstelle 14 und den festen Drosselstellen 12 und 13, ein Abschneidventil 18 eingesetzt.

Das Abschneidventil 18 enthält einen Ventilkörper 20, der in einer Ventilbohrung 21 eines Ventilgehäuses 22 als Ganzes unverschiebbar gehalten ist. Der Ventilkörper 20 besteht aus einem - in axialer Richtung gesehen - innenliegenden Teil 20A und aus einem außenliegenden Teil 20B. Die eine Stirnfläche des außenliegenden Teiles 20B ist von außerhalb des Ventilgehäuses 22 ohne Demontage irgendwelcher Teile frei zugänglich. Das außenliegende Teil 20B ist drehbar und axial unverschiebbar in der Ventilbohrung 21 gehalten. Das innenliegende Teil 20A ist axial verschiebbar in der Ventilbohrung 21 geführt. Das innenliegende Teil 20A ist durch einen in dem Ventilgehäuse 22 gehaltenen Stift 23 gegen Verdrehen gesichert. Dabei kann der Stift 23 beispielsweise an einer abgeflachten Seite oder an der Innenwand eines Langloches bzw. Schlitzes des innenliegenden Teiles 20A anliegen. Das innenliegende Teil 20A ist mit dem außenliegenden Teil 20B durch ein Gewinde 24 verbunden. In dem Ventilkörper 20 ist eine Druckfeder 25 angeordnet, die sich einerseits an dem innenliegenden Teil 20A und andererseits an einem Steuerkolben 26 abstützt. Zwischen dem Steuerkolben 26 und dem außenliegenden Teil 20B ist ein Steuerkantenpaar 27 angeordnet, das in der Neutralstellung des Steuerkolbens 26 offen ist und durch einen bestimmten in einem der Rückwirkungsräume 10 bzw. 11 wirkenden Druck zusteuerbar ist. Dadurch kann der Druckmittelstrom von der gemeinsamen Drosselstelle 14 zu den festen Drosselstellen 12 und 13 verändert werden.

Während einer Lenkbewegung wird eines der Rückschlagventile 16 oder 17 durch den in einem der Arbeitsräume des Servomotors 2 herrschenden Arbeitsdruck geschlossen. In dem zugehörigen Rückwirkungsraum 10 bzw. 11 kann sich ein Druck aufbauen. Der andere Rückwirkungsraum 11 bzw. 10 wird über das andere Rückschlagventil 17 bzw. 16 und das Steuerventil 1 mit dem Rücklauf zum Behälter 4 verbunden. Dadurch wirkt in einem der Rückwirkungsräume 10 bzw. 11 ein Rückwirkungsdruck, dessen Größe von der Höhe des Arbeitsdruckes und von den Querschnitten der gemeinsamen Drosselstelle 14 und der festen Drosselstellen 12 und 13 abhängt.

Der Rückwirkungsdruck wirkt auf die eine Seite des Steuerkolbens 26. Auf die andere Seite des Steuerkolbens 26 wirkt die Kraft der Druckfeder 25 und der Druck im Behälter 4, an den das Abschneidventil 18 über eine Leckleitung 32 angeschlossen ist. Der Rückwirkungsdruck in den Rückwirkungsräumen 10 und 11 wird damit über das Abschneidventil 18 nach dem Druckwaage-Prinzip auf einen Maximalwert begrenzt.

Die Kraft der Druckfeder 25 auf den Steuerkolben 26 und damit der Höchstwert des in den Rückwirkungsräumen 10 und 11 wirksamen Rückwirkungsdruckes läßt sich durch Verdrehen des außenliegenden Teiles 20B des Ventilkörpers 20 einstellen. Das außenliegende Teil 20B läßt sich durch eine von außen zugängliche Einstelleinrichtung, die beispielsweise die Form eines Schlitzes 28 hat, leicht verdrehen.

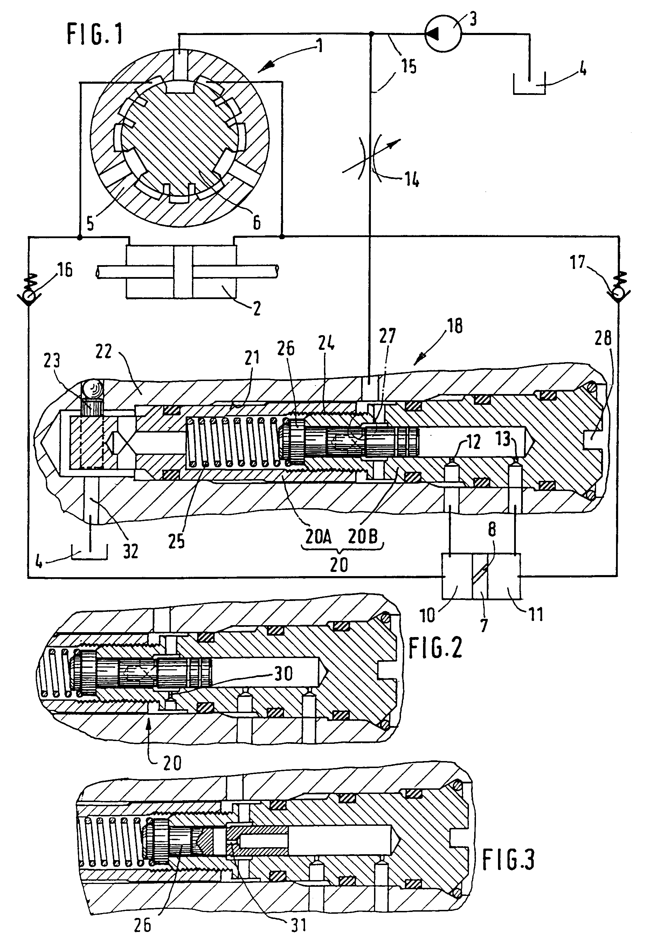

In dem Ausführungsbeispiel der Fig. 1 ist die gemeinsame Drosselstelle 14 mit einem in Abhängigkeit von der Fahrzeuggeschwindigkeit veränderbaren Durchflußquerschnitt ausgestattet. Dadurch erreicht man eine geschwindigkeitsabhängige Rückwirkungskraft. Soll auf eine solche geschwindigkeitsabhängige Veränderbarkeit der Rückwirkungskraft verzichtet werden, so wird die gemeinsame Drosselstelle nicht mit einem veränderbaren, sondern mit einem konstanten Durchflußquerschnitt ausgeführt. Dies ist dadurch möglich, daß die gemeinsame Drosselstelle 14 der Fig. 1 ersetzt wird durch eine gemeinsame Drosselstelle mit konstantem Durchflußquerschnitt, die beispielsweise als Drosselstelle 30 in dem Ventilkörper 20 (Fig. 2) oder als Drosselstelle 31 in dem Steuerkolben 26 angeordnet ist.

### Bezugszeichen

- 1: Steuerventil
- 2: Servomotor
- 3: Servopumpe
- 4: Behälter
- 5: Ventilelement
- 6: Ventilelement
- 7: Rückwirkungskolben
- 8: Schrägverzahnung
- 9: -
- 10: Rückwirkungsraum
- 11: Rückwirkungsraum
- 12: feste Drosselstelle
- 13: feste Drosselstelle
- 14: gemeinsame Drosselstelle
- 15: Druckleitung
- 16: Rückschlagventil
- 17: Rückschlagventil
- 18: Abschneidventil
- 19: -
- 20: Ventilkörper
- 21: Ventilbohrung
- 22: Ventilgehäuse
- 23: Stift
- 24: Gewinde
- 25: Druckfeder
- 26: Steuerkolben
- 27: Steuerkantenpaar
- 28: Schlitz
- 29: -
- 30: Drosselstelle
- 31: Drosselstelle
- 32: Leckleitung

## Patentansprüche

1. Hilfskraftlenkung, insbesondere für Kraftfahrzeuge, mit einem als Drehschieberventil ausgebildeten Steuerventil (1) für die Steuerung eines von einer Servopumpe (3) aus einem Behälter (4) geförderten Druckmittels zu und von den Arbeitsräumen eines Servomotors (2),
- wobei das Steuerventil zwei Rückwirkungsräume (10, 11) aufweist, die über je eine feste Drosselstelle (12, 13) und über eine gemeinsame Drosselstelle (14; 30; 31) an eine Druckleitung (15) der Servopumpe (3) angeschlossen sind und
- wobei der in den Rückwirkungsräumen (10, 11) wirksame Rückwirkungsdruck durch wenigstens ein Abschneidventil (18) auf einen Höchstwert begrenzbar ist,
dadurch **gekennzeichnet,**
- daß das Abschneidventil (18) als Druckwaage ausgebildet ist, deren Ansprechdruck ohne Demontage von außen einstellbar ist und
- daß das Abschneidventil (18) in der Druckleitung (15) der Servopumpe (3) zwischen der Servopumpe (3) und den Rückwirkungsräumen (10, 11) eingesetzt ist.

2. Hilfskraftlenkung nach Anspruch 1, dadurch **gekennzeichnet,** daß das Abschneidventil (18) in einer Ventilbohrung (21) einen zweiteiligen Ventilkörper (20) aufweist, dessen innenliegendes Teil (20A) verdrehfest und axial verschiebbar und dessen außenliegendes Teil (20B) verdrehbar und axial unverschiebbar in der Ventilbohrung (21) geführt sind,
- daß das innenliegende Teil (20A) mit dem außenliegenden Teil (20B) des Ventilkörpers (20) durch ein Gewinde (24) verbunden ist,
- daß das außenliegende Teil (20B) durch eine von außen zugängliche Einstelleinrichtung (28) verdrehbar ist,
- daß im Inneren des Ventilkörpers (20) ein von einer Druckfeder (25) belasteter Steuerkolben (26) angeordnet ist und
- daß die Kraft der Druckfeder (25) durch die Verdrehung des außenliegenden Teiles (20B) einstellbar ist.

3. Hilfskraftlenkung nach Anspruch 1, dadurch **gekennzeichnet,** daß die gemeinsame Drosselstelle (14) einen in Abhängigkeit von der Fahrzeuggeschwindigkeit veränderbaren Durchflußquerschnitt aufweist.

4. Hilfskraftlenkung nach Anspruch 1, dadurch **gekennzeichnet,** daß die gemeinsame Drosselstelle (30; 31) einen konstanten Durchflußquerschnitt aufweist.

5. Hilfskraftlenkung nach den Ansprüchen 2 und 4, dadurch **gekennzeichnet,** daß die gemeinsame Drosselstelle (30) in dem Ventilkörper (20) angeordnet ist.

6. Hilfskraftlenkung nach den Ansprüchen 2 und 4, dadurch **gekennzeichnet,** daß die gemeinsame Drosselstelle (31) in dem Steuerkolben (26) angeordnet ist.

## Claims

1. Auxiliary power steering mechanism, particularly for motor vehicles, with a control valve (1) in the form of a rotary slide valve for the control of a pressure medium supplied by a servo-pump (3) from a container (4) to and from the working chambers of a servo-motor (2),
- wherein the control valve has two reaction chambers (10, 11) which are connected to a pressure line (15) of the servo-pump (3) by means of a fixed throttle point (12, 13) in each case and by means of a common throttle point (14; 30; 31) and
- wherein the reaction pressure acting in the reaction chambers (10, 11) can be limited to a maximum value by means of at least one cut-off valve (18),
characterized
- in that the cut-off valve (18) is in the form of a pressure balance, the response pressure of which can be adjusted from outside without dismantling and
- that the cut-off valve (18) is placed in the pressure line (15) of the servo-pump (3) between the servo-pump (3) and the reaction chambers (10, 11).

2. Auxiliary power steering mechanism according to Claim 1, characterized in that in a valve bore (21) the cut-off valve (18) has a two-part valve body (20), the internal part (20A) of which is guided in the valve bore (21) so that it cannot rotate and can be displaced axially and the external part (20B) so that it can rotate and cannot be displaced axially,
- that the internal part (20A) is connected to the external part (20B) of the valve body (20) by means of a thread (24),
- that the external part (20B) can be rotated by means of an adjustment device (28) accessible from the outside,
- that a control piston (26) acted upon by a compression spring (25) is arranged in the inside of the valve body (20) and
- that the force of the compression spring (25) can be adjusted by means of the rotating of the external part (20B).

3. Auxiliary power steering mechanism according to Claim 1, characterized in that the common throttle point (14) has a throughflow cross-section that can be changed as a function of the vehicle's speed.

4. Auxiliary power steering mechanism according to Claim 1, characterized in that the common throttle point (30; 31) has a constant throughflow cross-section.

5. Auxiliary power steering mechanism according to Claims 2 and 4, characterized in that the common throttle point (30) is arranged in the valve body (20).

6. Auxiliary power steering mechanism according to Claims 2 and 4, characterized in that the common throttle point (31) is arranged in the control piston (26).

## Revendications

1. Direction assistée, notamment pour véhicules à moteur, comportant une valve de commande (1) configurée en valve à tiroir rotatif, pour commander par l'intermédiaire d'une servo-pompe (3) l'alimentation en fluide sous pression, provenant d'un réservoir (4) des chambres de travail d'un servo-moteur (2),
- dans laquelle la valve de commande comporte deux chambres de retour (10, 11) qui sont connectées respectivement par l'intermédiaire d'une zone d'étranglement fixe (12, 13) et par l'intermédiaire d'une zone d'étranglement commune (14; 30; 31) à un conduit de pression (15) de la servo-pompe (3).
- dans laquelle la pression de retour effective dans les chambres de retour (10, 11) est limitée à une valeur supérieure déterminée par au moins une valve d'arrêt (18),
**caractérisée** en ce que,
- la valve d'arrêt (18) est configurée comme une balance de pression, dont la pression d'attaque peut être réglée sans démontage de l'extérieur, et
- la valve d'arrêt (18) est montée dans le conduit de pression (15) de la servo-pompe (3) entre la servo-pompe (3) et les chambres de retour (10, 11).

2. Direction assistée selon la revendication 1, **caractérisée** en ce que la valve d'arrêt (18) comporte dans un alésage (21) un corps de valve (20) en deux parties, dont la partie (20A) disposée à l'intérieur est fixe en rotation et mobile axialement et dont la partie (20B) disposée à l'extérieur est mobile en rotation et fixe axialement, guidé à l'intérieur de l'alésage (21),
- en ce que la partie (20A) disposée à l'intérieur est liée à la partie (20B) disposée à l'extérieur du corps de valve (20) par un filetage (24)
- en ce que la partie (20B) disposée à l'extérieur peut être tournée à l'aide d'un dispositif de réglage (28) accessible de l'extérieur.
- en ce qu'à l'intérieur du corps de valve (20) est disposé un piston de commande (26) sollicité par un ressort de poussée (25), et
- en ce que la force exercée par le ressort de poussée (25) est réglée par la rotation de la partie (20B) disposée à l'extérieur.

3. Direction assistée selon la revendication 1, **caractérisée** en ce que la zone d'étranglement commune (14) présente une section d'ouverture variable en fonction de la vitesse du véhicule.

4. Direction assistée selon la revendication 1, **caractérisé**e en ce que la zone d'étranglement commune (30; 31) présente une section d'ouverture constante.

5. Direction assistée selon les revendications 2 et 4, **caractérisée** en ce que la zone d'étranglement commune (30) est disposée dans le corps de valve (20).

6. Direction assistée selon les revendications 2 et 4, **caractérisée** en ce que la zone d'étranglement commune (31) est disposée dans le piston de commande (26).
